# EUROPEAN PATENT APPLICATION

(11) **EP 1 408 246 A2**
(43) Date of publication of application: **14.04.2004**
(21) Application number: 03021646.9
(22) Date of filing: 26.09.2003
(51) Int. Cl.: F16C 1/26

(54) **Connector for a sheathed cable**

(30) Priority: 08.10.2002 DE 10246822
(71) Applicant: FICO CABLES, LDA, 4471 Maia (PT)
(72) Inventor: Monteiro, José Pereira, 4470-263 Vermoim-Maia (PT)
(74) Representative: Hess, Peter K., Dipl.-Phys.

(57) **Abstract**

The present invention relates to a connector for at least one sheathed cable, particularly an angled connector, comprising a housing with a displaceable cable entry and a cable exit and a moveable guiding wheel for guiding a cable of the at least one sheathed cable wherein the course of the cable in said cable entry and said cable exit can be changed with respect to each other by the displacement of the cable entry and/or the cable exit.

## Description

### 1. Field of the invention

The present invention relates to a connector for at least one sheathed cable, particularly an angled connector, which realizes the connection between a sheathed cable and a technical device or the connection between two sheathed cables which are not axially aligned to each other.

### 2. Prior art

Sheathed cables are used in different fields of techniques. They generally consist of a cable surrounded by a sheath. During use of said sheathed cable, the sheath and the cable execute a relative movement in relation to each other and operate in this manner connected technical devices.

Sheathed cables are for example used in motor vehicles, building machinery or door assemblies. By manual or motoric actuation of the cable within the sheath, either tensile forces or compressive forces are transmitted to the connected technical devices or to further sheathed cables.

The sheath of the sheathed cable functions for accommodating, bearing, protecting and guiding the cable in correspondence to the course of the sheathed cable. A further task consists in the fact that the sheath provides the opposite force against which the inner cable is displaced. Additionally, the relative displacement of the sheath and the cable to each other provides the way or distance which is transmitted to the connected sheathed cable or technical device.

Thus, sheathed cables are used for the transmission of displacements or forces also via great distances. Since the cable is guided within the sheath, it is also possible to install sheathed cables along non-linear paths. In view of the course of the sheaved cable, the disadvantage exists that said sheathed cable cannot be buckled or installed in a very small curve. This would lead to a wedging of the cable within the sheath and therefore a displacement of the cable within the sheath would be prevented.

It is therefore the problem of the present invention to provide a connector for at least one sheathed cable with a further sheathed cable or with a technical device which enables a simpler, effective, low maintenance connection compared to the prior art.

### 3. Summary of the invention

The present invention relates to a connector for at least on sheathed cable, particularly an angled connector, comprising a housing with a displaceable cable entry and a displaceable cable exit and a moveable guiding wheel for guiding a cable of the at least one sheathed cable wherein the course of said cable can be changed in said cable entry and said cable exit in relation to each other by the displacement of said cable entry and/or said cable exit.

The present invention realizes the connection of at least two sheathed cables to each other which run in an arbitrary angled arrangement to each other, i.e. they are not-axially or angled aligned to each other. By means of said connector according to the invention, the course direction of the one sheathed cable is changed in the course direction of the other sheathed cable in the smallest possible space. Further, said connector according to the invention serves for connecting a sheathed cable to a corresponding technical apparatus. To this end, said sheathed cable has not to run linearly to the connection of said technical apparatus or it has not to adapt its direction to the connection of said technical apparatus by an adapted curve to be effectively connected. By means of said connector according to the invention, the course direction of said sheathed cable is adapted to the connection of said technical apparatus shortly before connecting with the corresponding technical apparatus in the smallest possible space. To this end, the connector according to the invention defines the angled orientation of the course direction of the cable during connection to said technical device by the arrangement of the cable entry and the cable exit. In order to deviate the cable of said sheathed cable in the smallest possible space in an arbitrary direction, it is guided via a moveably mounted guiding wheel. This is executed within the connector according to the invention while said sheath of said sheathed cable supports at the housing of the connector. Based on the inventive arrangement, it is guaranteed that the course of the cable is changed in the smallest possible space without wedging said cable within the sheath of said sheath cable or buckling the same therein. By this way of deviating said sheathed cable based on the connector according to the invention, the length of the used sheath cable is reduced. Furthermore, said sheathed cables can be installed with less efforts for instance in motor vehicles since not necessary paths are saved. By the deviation of the cable in the smallest possible space and the guiding of the cable via a guiding wheel, frictional losses are additionally reduced during the operation of the sheathed cable. The connector according to the invention thus guarantees a more effective use of the sheathed cable as well as reduced maintenance efforts.

According to a preferred embodiment of the connector according to the invention, the arrangement of the cable entry and the cable exit can be changed so that the angle between the course directions of the cable in the cable entry and in the cable exit is varied. To this end, said cable entry and said cable exit can be preferably according to the invention displaced and mounted on linear and/or curved paths.

Based on the construction according to the invention of the present connector, the course direction of the cable before and after the moveable guiding wheel can be arbitrarily adapted to the respective application. In correspondence to the construction of the technical apparatus to be operated, thus, an optimal angle adjustment of the course direction of the cable is chosen in order to guarantee an ideal actuation via the connected sheathed cable. The cable entry and the cable exit are adjustably mounted in the housing. In turn, the housing defines the angle area in which the course direction of the cable can be varied. On this constructive basis, the connector according to the invention can be used for different technical applications as for example in doors or seat constructions of motor vehicles.

According to a further preferred embodiment of the present invention, the housing of the connector comprises at least one assembly for supporting a sheath of a sheathed cable.

The sheath of said sheathed cable is guided to said connector according to the invention and supports at the same. Said cable passes through said connector according to the invention and is either connected to a corresponding technical apparatus or to a further sheathed cable. To guarantee the function of the used sheathed cable, its sheath has to support correspondingly at the housing of the connector according to the invention. This arrangement for supporting the sheath guarantees a safe rest of the sheath as well as the necessary relative movement between said sheath and said cable.

According to a further preferred embodiment of the present connector, said guiding wheel is rotatably mounted in said housing wherein said guiding wheel comprises lateral mounting flanges or a central mounting opening for mounting in said housing.

As already mentioned above, said cable is guided through said connector according to the invention via said guiding wheel. In order to guarantee a guiding of said sheathed cable with low frictional losses, said guiding wheel is rotatably mounted in said housing of said connector. To this end, said guiding wheel is shaped like a pulley so that said cable cannot be released from said guiding wheel during operation of said sheathed cable. Beside the frictional losses, also the wear of the cable is minimized during guiding through the housing of the connector according to the invention. For realizing the rotatable mounting of said guiding wheel in said connector according to the invention, two different constructions are possible. Either, the guiding wheel comprises lateral mounting flanges which are installed in respective openings in the housing of the connector according to the invention, or said guiding wheel comprises a central mounting opening which is mounted on a specially provided projection within the housing of the connector according to the invention.

According to a further preferred embodiment of the present invention, the housing of said connector comprises opposing mounting openings with resilient ribs running in the direction of said opening in which the mounting flanges of said guiding wheel can be received.

Based on the above mentioned preferred embodiment of the present connector according to the invention, said guiding wheel is pushed in said housing of said connector and snaps there in the respective openings. To this end, in the opposing walls of said housing of the connector, openings with resilient clips are formed. Said ribs are pressed outwardly by the mounting flanges of said guiding wheel so that said mounting flanges can be installed in the respective openings. By the springing back of said ribs, said mounting flanges are in turn latched in said mounting openings of said housing. This construction enables a time effective assembling of said connector as well as an easy change of said guiding wheel in case of a failure.

According to a further preferred embodiment of the present connector, said housing comprises at its inner side a projection on which said guiding wheel with mounting opening can be rotatably latched. According to a further preferred embodiment, said guiding wheel with a mounting opening can be mounted on a projection comprising snapping hook-like latching elements. Also this construction enables a simple assembly of the connector according to the invention and, if necessary, an easy change of said guiding wheel.

The present connector according to the invention is preferably used for a connecting of at least two sheathed cables. Additionally, said connector is used for connecting at least one sheathed cable with an apparatus, particularly a seat assembly in motor vehicles or a door assembly in motor vehicles.

### 4. Short description of the drawing

The present invention is described in detail with reference to the accompanying drawing. It shows:
- Fig. 1: the housing of the connector according to the invention according to a first preferred embodiment without a guiding wheel;
- Fig. 2: the housing of the connector according to the invention and the corresponding guiding wheel according to a first preferred embodiment of the present invention; and
- Fig. 3: the housing of the connector according to the invention in a sectional view and the corresponding guiding wheel according to a second preferred embodiment of the present invention.

### 5. Detailed description of the invention

The present invention relates to a connector 1 for connecting a sheathed cable with any technical device or for connecting a sheathed cable with a further sheathed cable. Said sheathed cable generally consists of an inner cable which is made for example of steel. Said inner cable is surrounded by a sheath. During operation of said sheathed cable, a relative movement between said sheath and said cable is executed by which tensile or compressive forces or displacements are transmitted.

By the connector according to the present invention, shortly before the connection of said sheath cable to a corresponding technical device or shortly before connection of said sheath cable to a further sheathed cable, the course of the cable in the inner of said connector is changed. The change of the course of the cable is realized in the smallest possible space without restricting the operation of said sheathed cable. Sheathed cables are generally installed in great curves to not too strongly increase the friction between the sheath and the cable or to not completely prevent the operation of the sheathed cable. This space occupying installation of the sheathed cable requires much space as for example in motor vehicles or in other machines, a big length of said sheathed cable and corresponding fixings to permanently guarantee a perfect operation of said sheathed cable. Additionally, these long sheathed cables require high maintenance efforts. By the deviation of said cable in the connector according to the invention, an effective supply of said sheathed cable to said technical apparatus is realized. In this manner, the length of the sheathed cable and the corresponding maintenance effort is reduced and an effective operation of said sheathed cable is provided since frictional losses and wear during deviation of said sheathed cable is minimized.

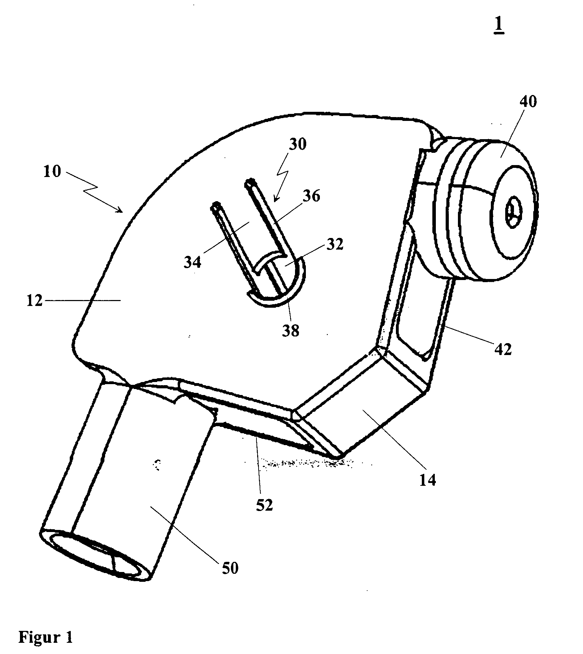

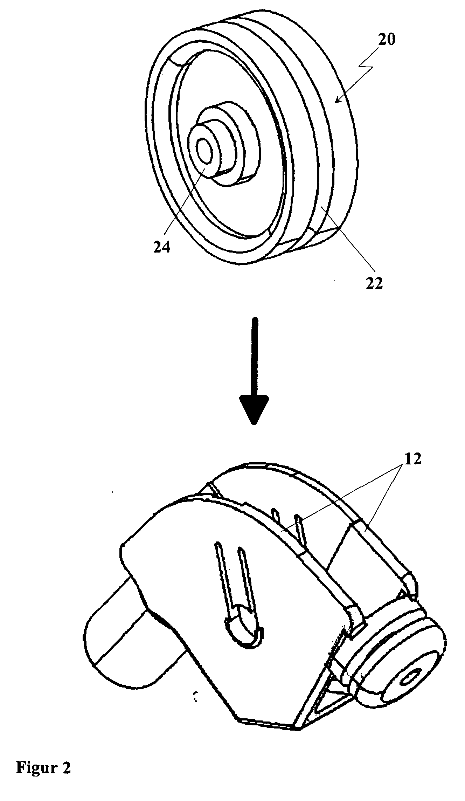

Fig. 1 shows a first preferred embodiment of the connector according to the present invention. Said connector 1 comprises a housing 10 in which a guiding wheel 20 (see Fig. 2) is rotatably mounted via a mounting mechanism 30. Further, the connector according to the invention has a connection 50 for the sheath of the sheathed cable. At this connection 50, said sheath supports and said cable runs into said housing of said connector according to the invention. Based on this reason, the connection 50 for said sheath is also indicated as a cable entry of the connector 1.

Furthermore, the connector according to the invention comprises a connecting mechanism 40 for connecting with a corresponding technical apparatus or with a further sheathed cable. This connecting mechanism 40 comprises preferably according to the invention corresponding constructive arrangements for mounting and/or for supporting of said connector according to the invention at the mentioned technical device. In case two sheathed cables are connected to each other by means of the connector 1 according to the invention, said connecting mechanism 40 serves for receiving and supporting the sheath of said second sheathed cable. In this case, its shape is similar to the connection 50 for the sheath. After the cable has passed through the housing of the connector 1 according to the invention, it exists the connector 1 at the connecting mechanism 40. Thus, the connecting mechanism 40 is also indicated as the cable exit. The respective course direction of the cable at the cable entry and the cable exit is preferably according to the invention equal to the course of the middle axis of the opening at the cable entry and the cable exit. Therefore, the angled orientation of the middle axis of the cable entry and the cable exit to each other corresponds to the angled orientation of the course direction of the cable.

In Figures 1 and 2, the single components of the inventive connector 1 are shown according to a first preferred embodiment of the present invention. The housing 10 comprises two opposing lateral walls 12 spaced apart from each other. At the bottom side of the housing 10, said lateral walls 12 are connected via a bridge 14. Said bridge 14 defines the spacing of both opposing lateral walls 12 by its size. According a first preferred embodiment, the upper side of the housing 10 is open. Thereby, the installation of a guiding wheel 20 as well as the insertion of said cable in said connector 1 according to the invention is facilitated. Dependent on the position of the inventive connector, it is also preferred according to the invention to configure the housing 10 in such a way that its upper side can be closed. By this closing, on the one hand the installation of said guiding wheel 20 and said cable is guaranteed and on the other hand a penetration of dirt, humidity or chemicals is prevented.

In both opposing lateral walls 12 of said housing 10, a mounting mechanism 30 for said guiding wheel 20 is preferably according to the invention configured. This mounting mechanism 30 serves for accommodating and rotatably mounting said guiding wheel 20. According to a first preferred embodiment, said mounting mechanism 30 comprises a resiliently configured clip 34. Said resilient clip 34 runs in the direction of an opening 32 in which said guiding wheel 20 is rotatably mounted. Along the elongated side walls of said resilient clip 34, slots 36 are configured, respectively, which enable the springiness of said clip 34. A reinforcing projection 38 is positioned at the lower edge of the opening 32. Said reinforcing projection 38 guarantees a reliable rest of said guiding wheel 20 which is pressed in the direction of the reinforcing projection 38 within the housing 10 based on the course of the cable within the connector 1 according to the invention. The guiding wheel 20 (see Fig. 2) is installed in said mounting mechanism 30 according to a first preferred embodiment of the connector 1 according to the invention. Said guiding wheel 20 corresponds in its preferred embodiment to a pulley. The guiding wheel 20 comprises along its running surface a recess 24 which serves for guiding the cable within the connector according to the invention. The guiding wheel 20 furthermore comprises according to the first preferred embodiment axial-symmetrically arranged mounting flanges 22 on both sides. These mounting flanges 22 project over the width of the guiding wheel 20 which is defined by the running surface of the guiding wheel 20.

For inserting the guiding wheel 20 in the connector 1 according to the invention, said guiding wheel 20 is pushed in said housing 10. The mounting flanges 22 are oriented in such a way during this displacement that they move along the resilient clips 34. Since preferably according to the invention the distance between the ends of said mounting flanges 22 is bigger than the distance of the lateral walls 12 of the housing 10, said resilient clips 34 are pressed outwardly by the insertion of the guiding wheel 20. The guiding wheel 20 is pushed in the direction of the opening 32 of the mounting mechanism 30 until the mounting flanges 22 abut at the reinforcing projection 38 of the opening 32. The diameter of the opening 32 is a bit bigger than the diameter of the mounting flanges 22 so that the mounting flanges 22 are rotatably guided and mounted in said opening 32. Further, said guiding wheel 20 is latched via said mounting flanges 22 within said opening 32 of said mounting mechanism 30. The latching is executed by means of the resilient clips 34 which spring back in their initial position after inserting the mounting flanges 22 in the opening 32. Based on this simple arrangement, said guiding wheel 20 is preferably according to the invention inserted together with the cable of the sheathed cable and latched in the housing 10.

The sheath of said sheathed cable which is deviated by the connector 1 according to the invention supports at the connection 50. Said connection 50 can be rigidly or adjustably constructed so that for example the length of the sheath can be adjusted via the connection 50 by means of a thread. Further, the connection 50 is guided in a track-like construction 52 of the housing 10 in which it can be arbitrarily displaced and mounted. The displacing or dislocating of the connection 50 in said track like constructions 52 is preferably according to the invention continuously executed. It is also preferred to give intervals for the displacement. The mounting of said connection 50 in the desired position is realized by clamping or by means of locking means. By the above displacing or dislocating of the connection 50, the arrangement of the sheathed cable is adapted to the local conditions during installation. In this manner, an optimal supply of the sheathed cable is realized to the corresponding technical device via the connector 1 according to the invention. Additionally, the course of the cable at the cable entry and the cable exit with respect to each other can be changed.

A similar track-like construction 42 serves for the displacement and mounting of the connecting mechanism 40 for connecting the connector 1 according to the invention with a corresponding technical device or with a further sheathed cable. Also in this case the displacement and mounting of the connecting mechanism 40 within said track-like construction 42 is used for an optimal adaptation of the course of the cable to the constructive conditions in front of the technical device to be actuated. It comprises the same technical features as the track like construction 52. Further, the connecting mechanism 40 according to a preferred embodiment comprises fixing constructions which realize a fixing, latching, adapting and assuring of the connector 1 according to the invention at the device to be actuated. Such constructions are known to a skilled person and are not further described at this position. If the connector according to the invention is used for connecting with a further sheathed cable, said connecting mechanism 40 shows a similar shape as the connection 50 for the sheath of the sheathed cable.

As can be seen in Fig. 1, a cable entry and a cable exit with corresponding course directions of the cable are defined by the connecting mechanism 40 and the connection 50 for the sheath. Said course directions of the cable have a corresponding angled orientation to each other. Since the connecting mechanism 40 as well as the connection 50 are only linearly displaced within their track-like constructions 42, 52, the angle orientation of the course directions of the cable to each other cannot be varied based on this displacement. However, an adaptation of the local arrangement of the sheathed cable to the connection of the technical device is carried out to optimally use the available space.

For the variation of the angled orientation of the course directions of the cable to each other in the cable entry 50 and the cable exit 40, the track-like constructions 42, 52 are according to a further preferred embodiment of the present invention (not shown) curved configured. This construction enables a displacement and mounting of the connecting mechanism 40 and the connection 50 on the curve defined by the track-like constructions 42, 52. The advantage of this arrangement consists in a higher flexibility and angle adaptation of the connector 1 according to the invention to the device to be actuated by the sheathed cable or to a constructive characteristic and space requirement in a machine in which the connector according to the invention is used.

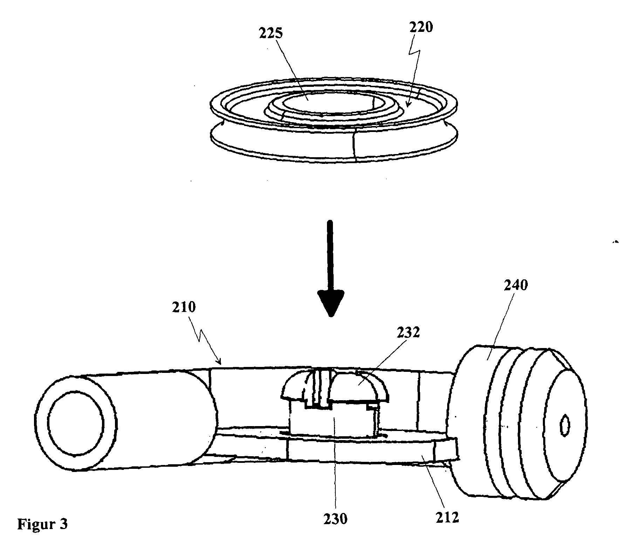

According to a further preferred embodiment (see Fig. 3), the guiding wheel 220 is mounted by means of a projection 230 in the housing 210 of the connector according to the invention. Said guiding wheel 220 has preferably according to the invention the general shape of a pulley wherein an opening 225 is axial symmetrically formed. This opening 225 is pushed on the projection 230 of the housing 210 and latches at this position. The latching is carried by means of snapping hook-like projections 232 which are positioned at the end of the projection 230. Preferably according to the invention, four snapping hook-like projections 232 are used which are separated by slots, respectively. It is also preferred according to the invention to reduce or increase the number of snapping hook-like projections 232 to e.g. reduce the production efforts of the connector according to the invention or facilitate the assembly or disassembly of the guiding wheel 220. For a simplified assembly of the guiding wheel 220 in the housing 210 according to a second preferred embodiment of the connector according to the invention, said housing 210 is configured in two parts. To this end, both opposing lateral walls 212 are connectably constructed for example by means of a locking mechanism. It is possible on this basis, to realize a housing 210 having very small lateral dimensions.

According to a further preferred embodiment of the present invention, said guiding wheels 20, 220 are used having different diameters. In the context of the displacing of the connection 50 for said sheath and said connecting mechanism 40, 240 along arc-shaped or curved or linear track like constructions 42, 52, the course of the cable is adapted to said cable entry and said cable exit by the variation of the diameter of said guiding wheel 20, 220. In other words, a buckling of said cable is restricted or prevented at said cable entry and said cable exit. In this manner, the wear and the frictional losses at the cable are reduced.

According to a further preferred embodiment of the present invention, the connector 1 with its single components is made of plastic material. In this manner, a low weight, a low wear and a cheap production is realized. Additionally, the use of a guiding wheel made of plastic material in a housing made of plastic material guarantees low frictional losses and at the same time reliable stability. It is also preferred according to the invention to manufacture the connector of metal as long as certain constructive and environmental requirements make this necessary.

### List of reference numbers

- 1, 200: connector
- 10, 210: housing
- 12, 212: lateral wall
- 14: bridge
- 20, 220: guiding wheel
- 22: mounting flange
- 24: recess
- 30: mounting mechanism
- 32: opening
- 34: resilient clip
- 36: slot
- 38: projection
- 40, 240: connecting mechanism
- 42: track-like construction
- 50: connection for the sheath
- 52: track-like construction
- 225: opening
- 231: projection
- 233: snapping hook-like projections

## Claims

1. A connector (1) for at least one sheath cable, particularly an angled connector, comprising:
a. a housing (10; 210) with a displaceable cable entry (50) and a displaceable cable exit (40) and a moveable guiding wheel (20; 220) for guiding a cable of the at least one sheathed cable, wherein
b. the course of the cable in said cable entry (50) and said cable exit (40) with respect to each other can be changed by the displacement of said cable entry (50) and/or said cable exit (40).

2. Connector (1) according to claim 1, wherein the arrangement of said cable entry (50) and said cable exit (40) can be changed so that the angle between the course direction of the cable in said cable entry (50) and said cable exit (40) is varied.

3. Connector (1) according to claim 1 or 2, wherein said cable entry (50) and said cable exit (40) can be displaced and mounted on linear and/or curved paths.

4. Connector (1) according to claim 1, wherein said housing (10) comprises at least one arrangement (50) for supporting a sheath of a sheathed cable.

5. Connector (1) according to claim 1, wherein said guiding wheel (20; 220) is rotatably mounted in said housing (10; 210).

6. Connector (1) according to claim 5, wherein said guiding wheel (20; 220) comprises lateral mounting flanges (24) or a central mounting opening (225) for mounting in said housing (210).

7. Connector (1) according to claim 6, wherein said housing (10) comprises opposing mounting openings (32) with resilient clips (34) running thereto in which the mounting flanges (24) of said guiding wheel (20) are received.

8. Connector (1) according to claim 6, wherein said housing (210) comprises a projection (230) on its inside on which said guiding wheel (220) with mounting opening (225) can be rotatably latched.

9. Connector (1) according to one of the preceding claims, wherein said connector (1) is used for connecting two sheathed cables.

10. Connector (1) according to one of the claims 1 to 8, wherein said connector (1) is used for connecting at least one sheathed cable with an apparatus, particularly a seat assembly in motor vehicles or a door assembly in motor vehicles.
